# EUROPÄISCHE PATENTANMELDUNG

(11) **EP 0 574 965 A1**
(43) Veröffentlichungstag der Anmeldung: **22.12.1993**
(21) Anmeldenummer: 93113886.1
(22) Anmeldetag: 20.10.1990
(51) Int. Cl.: F16H 61/02, F16H 61/10

(54) **Verfahren zum Ermitteln eines Schaltsignals aus einem Schaltkennfeld**

(30) Priorität: 26.01.1990 DE 4002325
(62) Teilanmeldung aus: 90120166.5
(71) Anmelder: Bayerische Motoren Werke Aktiengesellschaft, 80788 München (DE)
(72) Erfinder: Welter, Andreas, D-80339 München (DE); Werner, Jürgen, D-85748 Garching (DE); Stephan, Anton, D-85598 Baldham (DE)

(57) **Zusammenfassung**

Die Erfindung beschreibt ein Verfahren zum Ermitteln eines Schaltsignals aus diesem Schaltkennfeld. Durch das Verfahren soll verhindert werden, daß das Getriebe im Schubbetrieb und gegebenenfalls unter hoher Querbeschleunigung hochschaltet. Erreicht wird dies, indem das Überschreiten der Hochschaltkennlinien durch den Betriebspunkt festgehalten wird. In einer bevorzugten Ausführung wird dabei die Stellung des Fahrpedals gemessen und beim Überschreiten der Hochschaltkennlinie in eine Fahrpedalgeschwindigkeit umgewandelt. Der so erhaltene Wert der Fahrpedalgeschwindigkeit ist ein Maß dafür, ob das Getriebe hochschaltet oder im bisherigen Gang verbleibt. Gegebenenfalls wird beim Überschreiten eines Querbeschleunigungsgrenzwertes der Hochschaltvorgang unterdrückt.

## Beschreibung

Die Erfindung bezieht sich auf ein Verfahren zum Ermitteln eines Schaltsignals aus dem Schaltkennfeld eines über eine elektronische Getriebesteuereinheit gesteuertes Automatikgetriebe in einem Kraftfahrzeug nach dem Oberbegriff des Hauptanspruchs.

Automatikgetriebe in Kraftfahrzeugen werden immer mehr elektronisch gesteuert. Dabei ist das Schaltkennfeld in der elektronischen Steuereinheit abgespeichert. Wie dies realisiert sein kann, zeigt die DE-OS 28 11 574. Je nach Betriebspunkt gibt die Steuereinheit an die einzelnen Schaltventile den Befehl zum Hoch- oder Rückschalten. Das Schaltkennfeld enthält hierzu für jeden Gangwechsel eine Hochschaltkennlinie und ebenso eine Rückschaltkennlinie. Die Schaltkennlinien sind dabei als Funktion der Fahrzeuggeschwindigkeit und der Stellung der Drosselklappe bzw. des Öffnungswinkels dargestellt. Sensoren tasten laufend diese Größen ab und geben entsprechende Signale an die Steuereinheit. Da in vielen Fällen das Fahrpedal mechanisch mit der Drosselklappe verbunden ist, kann der Öffnungswinkel der Drosselklappe auch durch die Stellung des Fahrpedals ermittelt werden.

Ebenfalls aus der DE-OS 28 11 574 kann beispielhaft entnommen werden, wie ein der Stellung des Fahrpedals proportionales Fahrpedalsignal abgetastet und der Steuerelektronik zugeführt wird.

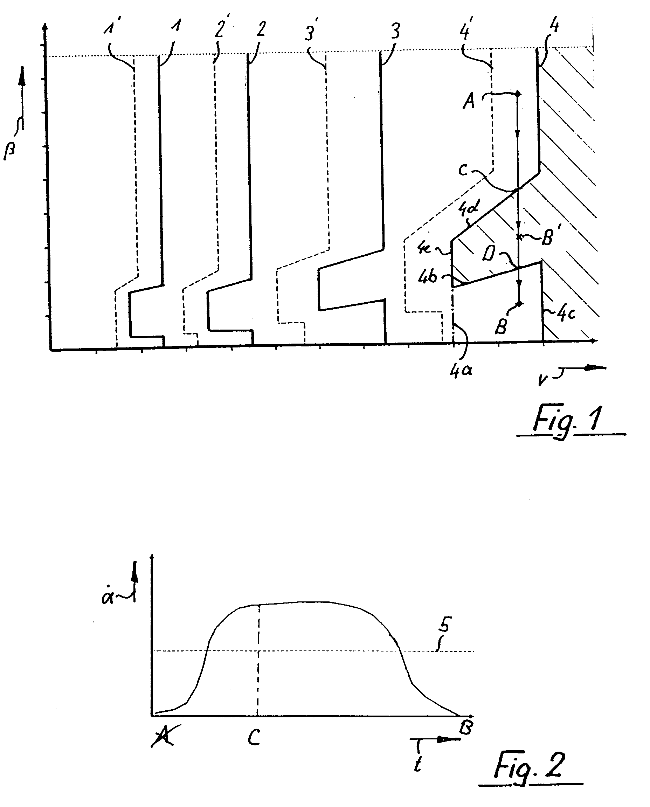

Durch die beschriebene Art der Getriebesteuerung ist nicht in jeder Fahrsituation das richtige Schaltmanöver sichergestellt. Insbesondere das Hochschalten im Schubbetrieb macht sich bei sportlicher Fahrweise sehr störend bemerkbar. Dies sei anhand der Figur 1 erklärt.

Die Figur 1 zeigt ein Schaltkennfeld mit den einzelnen Schaltkennlinien. Auf der Abszisse ist die ansteigende Fahrgeschwindigkeit, mit v bezeichnet, abgetragen und auf der Ordinate der größer werdende Öffnungswinkel β der Drosselklappe der Brennkraftmaschine. Dabei soll das Fahrpedal - und dies gilt für die ganze nachfolgende Beschreibung - mechanisch mit der Drosselklappe der Brennkraftmaschine verbunden sein. Der Winkeländerung des Fahrpedals folgt proportional eine Änderung des Öffnungswinkels der Drosselklappe. Steigendes β bedeutet, daß die Drosselklappe immer mehr öffnet, was gleichbedeutend ist mit einem immer stärkeren Niederdrücken des Fahrpedals.

Das Kennfeld zeigt zwei Arten von Schaltkennlinien, nämlich die mit ausgezogenem Strich dargestellten Kennlinien 1, 2, 3 und 4. Es sind die Hochschaltkennlinien. Dabei repräsentiert beispielsweise die Schaltkennlinie 1 das Hochschalten vom ersten in den zweiten Gang. Entsprechend ist die Schaltkennlinie 4 für das Hochschalten vom vierten in den fünften Gang vorgesehen. Daneben sind Schaltkennlinien gestrichelt dargestellt und mit 1', 2', 3' und 4' bezeichnet. Diese Schaltkennlinien repräsentieren die Rückschaltkennlinien. Sie sind nur der Vollständigkeit halber erwähnt, zu der vorliegenden Erfindung haben sie im wesentlichen keinen Bezug.

Stellvertretend für die anderen Hochschaltkennlinien soll der Verlauf der Hochschaltkennlinie 4 beschrieben werden. Ausgehend von einem großen β, also von einer offenen Drosselklappe, fällt die Hochschaltkennlinie 4 zunächst senkrecht nach unten. Bei etwa halbgeschlossener Drosselklappe geht sie in einen schräg nach unten, in Richtung kleiner werdendem v zeigenden Kurvenabschnitt 4d über. Daran schließt sich wieder ein senkrecht abfallender kurzer Kurvenast 4e an, der in einen strichpunktiert dargestellten Kennlinienast 4a übergeht. Der Kennlinienast 4a deutet dabei den Verlauf der Hochschaltkennlinie in einem herkömmlichen Schaltkennfeld an.

Das Phänomen des Hochschaltens beim Schubbetrieb soll nun im Bereich dieser Hochschaltkennlinie erläutert werden. Angenommen, das Fahrzeug fährt mit einer bestimmten Geschwindigkeit und die Drosselklappe ist nahezu geöffnet. Dies soll im Kennlinienfeld einem Betriebspunkt A entsprechen. Fährt das Fahrzeug nun beispielsweise auf eine Kurve zu, und möchte der Fahrer die Geschwindigkeit verringern, so wird er zunächst einmal seinen Fuß vom Fahrpedal nehmen. Damit schwenkt das Fahrpedal zurück und mit ihm macht die Drosselklappe zu, das heißt der Öffnungswinkel β wird schnell kleiner. Da aber das Fahrzeug im ersten Augenblick nicht an Geschwindigkeit verliert, wandert der Betriebspunkt von A in etwa senkrecht nach unten in Richtung B. Er kreuzt dabei an der Stelle C die Hochschaltkennlinie 4, was bei der herkömmlichen Getriebesteuerung für die elektronische Steuereinheit bedeutet, einen entsprechenden Hochschaltbefehl abzugeben. Das Getriebe schaltet also in den fünften Gang. Die Motordrehzahl fällt dadurch ab und als Folge tritt wenigstens anfänglich eine unerwünschte Bremswirkung des Motors auf.

Möchte der Fahrer nach Durchfahren der Kurven wieder beschleunigen und drückt dabei das Fahrpedal durch, so muß das Getriebe zunächst einmal wieder vom fünften in den vierten und möglicherweise sogar in den dritten Gang zurückschalten. Erst nach diesen Schaltvorgängen ist wieder die gewünschte Motorleistung verfügbar. Da das Zurückschalten Zeit in Anspruch nimmt, kann dies, wie erwähnt, störend empfunden werden. Außerdem schaltet das Getriebe viel häufiger als notwendig wäre.

Es ist daher wünschenswert, das Hochschalten im Schubbetrieb zu unterdrücken. Nach der europäischen Stammanmeldung 90 120 166.5 sind hierfür Möglichkeiten aufgezeigt für ein Schaltkennfeld, bei dem die Hochschaltkennlinien in ihrem Verlauf eine in Richtung niedriger Geschwindigkeit vorspringende Ausprägung weisen. Fällt der Betriebspunkt durch Loslassen des Fahrpedals nach unten, kann er die Hochschaltkennlinie zweimal schneiden. Daraus läßt sich die Information ableiten, ob der Fahrer einen höheren Gang einlegen oder die Geschwindigkeit verringern möchte. Es liegt dabei die Überlegung zugrunde, daß der Fahrer tatsächlich die Geschwindigkeit seines Fahrzeugs verringern möchte, wenn der Betriebspunkt aus dem Meßbereich der Hochschaltkennlinie schon nach kurzer, vorgegebener Zeit nach unten wieder austritt. Der Fahrer hat das Gaspedal schnell losgelassen. Verharrt der Betriebspunkt allerdings länger als eine vorgegebene Zeit im Meßbereich der Kennlinie, wird dies in der Weise gedeutet, daß der Fahrer auf eine sparsame Fahrweise durch Hochschalten übergehen möchte. Er wird tatsächlich das Gaspedal nur ein wenig zurücknehmen.

Nach einer ersten Lösung der Stammanmeldung wird der Zeitpunkt beim ersten Überschreiten der Hochschaltkennlinie erfaßt. In der Getriebesteuereinheit wird eine Zeitspanne vorgegeben. Hat der Betriebspunkt am Ende der Zeitspanne die Hochschaltkennlinie bereits ein zweites Mal geschnitten, so wird in der Getriebesteuereinheit kein Hochschaltsignal abgegeben.

Bei der zweiten Lösung wird das der Stellung des Fahrpedals proportionale Fahrpedalsignal laufend gemessen und der Getriebesteuereinheit zugeführt. Dort wird das Fahrpedalsignal in einen Meßwert umgewandelt, der die Fahrpedalgeschwindigkeit wiedergibt. Überschreitet der Betriebspunkt eine Hochschaltkennlinie, so wird anhand der aktuellen Gaspedalgeschwindigkeit extrapoliert, wann der Betriebspunkt die Hochschaltkennlinie das nächste Mal überschreiten wird. Liegt der Zeitpunkt des zweiten Überschreitens der Kennlinie innerhalb eines vorgegebenen Zeitraumes, so wird die Schaltung unterdrückt. Die Abschätzung des unteren Schnittpunktes von der augenblicklichen Lage des Betriebspunktes wird so lange wiederholt, bis die Hochschaltkennlinie tatsächlich erneut überschritten wird oder der berechnete Zeitpunkt außerhalb des vorgegebenen Zeitraumes liegt.

Auch hier wird die Art und Weise des Überschreitens der Hochschaltkennlinien als Wunsch des Fahrers entsprechend dem Vorhergesagten interpretiert.

Demgegenüber unterdrückt die Erfindung das Hochschalten im Schubbetrieb dadurch, daß das Fahrpedalsignal beim Überschreiten des sich aus der augenblicklichen Fahrgeschwindigkeit und Drosselklappenstellung ergebenden Betriebspunktes einer Hochschaltkennlinie in ein die Fahrpedalgeschwindigkeit wiedergegebenen Meßwert umgewandelt und mit einem in der Getriebesteuereinheit abgespeicherten Grenzwert verglichen und beim Unterschreiten dieses Grenzwertes ein Schaltsignal zum Hochschalten abgegeben wird.

In einer bevorzugten Ausführung wird die Hochschaltung unterdrückt, wenn die Querbeschleunigung des Fahrzeuges einen vorgegebenen Grenzwert überschreitet. Zur Bestimmung der Querbeschleunigung kann, außer einem Querbeschleunigungssensor, ein Algorithmus dienen, der aus dem Lenkwinkel und der Fahrzeuggeschwindigkeit die Querbeschleunigung berechnet.

In einer weiteren zweckmäßigen Ausführung wird allein der Lenkwinkel mitberücksichtigt. Es sollen damit solche Fälle abgedeckt werden, wo beispielsweise der Fahrer die Autobahn verläßt und in die engen Kurve einer Autobahnausfahrt einfährt. In diesem Fall wäre ein Hochschalten des Getriebes ebenfalls unsinnig.

Nachfolgend soll anhand der Zeichnung die Wirkungsweise des erfindungsgemäßen Verfahrens noch einmal verdeutlicht werden. Neben der schon teilweise besprochenen Figur 1 zeigt die Figur 2 einen beispielhaften Verlauf der Fahrpedalgeschwindigkeit in Abhängigkeit der Zeit.

Dabei ist die Größe der Fahrpedalgeschwindigkeit in Abhängigkeit der Zeit aufgetragen. Auf der Abszisse ist demnach mit t die Zeit dargestellt, während auf der Ordinate die Fahrpedalgeschwindigkeit α̊ abgetragen ist. Zum Zeitpunkt Null, was dem Betriebspunkt A entspricht, ist die Fahrpedalgeschwindigkeit ebenfalls Null.

Wird das Fahrpedal losgelassen, steigt die Geschwindigkeit rapide an, geht zu einem Zeitpunkt, der in Figur 2 mit C bezeichnet ist, in einen etwa konstanten Wert über und fällt dann ab, um im Bereich eines Punktes B wieder zu Null zu werden. In Figur 2 ist außerdem mit 5 ein Grenzwert eingezeichnet. Bleibt die Fahrpedalgeschwindigkeit unterhalb dieses Grenzwertes 5, der ebenfalls in der Getriebesteuereinheit abgespeichert ist, so wird ein Schaltbefehl zum Hochschalten des Getriebes abgegeben. Beim Überschreiten des Grenzwertes 5, wie es in Figur 2 dargestellt ist, wird der Schaltbefehl unterdrückt.

## Patentansprüche

1. Verfahren zum Ermitteln eines Schaltsignals für ein über eine elektronische Getriebesteuereinheit gesteuertes Automatikgetriebe in einem Kraftfahrzeug, das durch eine mit einem Fahrpedal beeinflußbaren Brennkraftmaschine angetrieben wird und bei dem ein die Stellung des Fahrpedals proportionales Fahrpedalsignal abgetastet und der Getriebesteuereinheit zugeführt wird, in der Hochschaltkennlinien eines Schaltkennfeldes als Kurven eines Fahrzeuggeschwindigkeit-Drosselklappenstellung-Diagramm abgelegt sind, dadurch gekennzeichnet, daß das Fahrpedalsignal beim Überschreiten des sich aus der augenblicklichen Fahrgeschwindigkeit und Drosselklappenstellung ergebenden Betriebspunktes einer Hochschaltkennlinie in ein die Fahrpedalgeschwindigkeit wiedergebenden Meßwert umgewandelt und mit einem in der Getriebesteuereinheit abgespeicherten Grenzwert verglichen und beim Unterschreiten dieses Grenzwertes ein Schaltsignal zum Hochschalten abgegeben wird.

2. Verfahren nach Anspruch 1, dadurch gekennzeichnet, daß die Querbeschleunigung des Fahrzeuges gemessen und das Meßsignal der Getriebesteuereinheit zugeführt wird und daß bei Überschreiten der Querbeschleunigung über ein vorgegebenes Maß eine Hochschaltung unterbleibt.

3. Verfahren nach Anspruch 1 oder 2, dadurch gekennzeichnet, daß das Lenkwinkelsignal als zusätzliches Kriterium für eine Hochschaltung der Getriebesteuereinheit zugeführt wird.
